# EUROPÄISCHE PATENTANMELDUNG

(11) **EP 0 812 666 A2**
(43) Veröffentlichungstag der Anmeldung: **17.12.1997**
(21) Anmeldenummer: 97109162.4
(22) Anmeldetag: 06.06.1997
(51) Int. Cl.: B27B 31/00, B27B 1/00

(54) **Verfahren zur Steuerung von Sägeschnitten und Kappsägevorrichtung hierfür**

(30) Priorität: 15.06.1996 DE 19623983
(71) Anmelder: HOLTEC GmbH & Co., D-53940 Hellenthal (DE)
(72) Erfinder: Klement, Peter, Dipl.-Ing., 53940 Hellenthal-Blumenthal (DE)
(74) Vertreter: Lins, Edgar, Dipl.-Phys. Dr.jur.

(57) **Zusammenfassung**

Zur Steuerung von Sägeschnitten mittels einer Kappsägevorrichtung an einem in Längsrichtung vorgeförderten Stammholz wird während des Vorförderns ständig der Durchmesser (Dx) des Stammholzes (2) sowie eine Information über die Restlänge des Stammholzes (2) ermittelt und in Abhängigkeit hiervon wird ermittelt, welcher Kappschnitt zur optimierten Aufteilung des Stammholzes (2) in Abhängigkeit von einem Vorrat gewünschter Abschnittslängen und ggf. -durchmesser durchgeführt wird.

Hierdurch kann eine separate Vermessung des Stammholzes (2) entfallen.

## Beschreibung

Die Erfindung betrifft ein Verfahren zur Steuerung von Sägeschnitten mittels einer Kappsägevorrichtung an einem in Längsrichtung vorgeförderten Stammholz.

Die Erfindung betrifft ferner eine Kappsägevorrichtung für Stammholz mit einem Einlaufförderer, mit einer im stromabwärts gelegenen Ende des Einlaufförderers angeordneten Zentriervorrichtung und mit einer stromabwärts folgenden Kappsägeanordnung.

Die Aufteilung von Holzstämmen durch Kappsägevorrichtungen kann dadurch erfolgen, daß die Stammholzstücke in einer Vermessungsvorrichtung bezüglich ihrer Länge und des Durchmessers vermessen werden. Unter Berücksichtigung von benötigten Stammholzabschnitten wird die Aufteilung des Stammholzes in möglichst optimierter Form so vorgenommen, daß die gewünschten Stammholzabschnitte unter möglichst geringem Anteil von nicht mehr verwertbaren Reststücken hergestellt werden. Eine geeignete Vermessungsvorrichtung, bei der das Stammholz auf einem anhebbaren Lager gelagert wird und über dem Stammholz ein U-förmiger Sensor in Längsachse des Stammholzes verfährt, ist aus DE 34 17 717 C2 bekannt.

Durch DE 94 01 780 U ist ferner eine Kappsägevorrichtung bekannt, bei der das Stammholzende kurz vor der Kappsäge mit in den Förderweg des Stammholzes einschwenkbaren Klappen zentriert wird, nachdem die Förderbewegung beendet worden ist. Zur Beschleunigung des Sägeschnittes ist in die Klappen eine Meßanordnung für die Höhe des Stammholzes durch parallele Lichtschranken integriert. Entsprechend der gemessenen Höhe des Stammholzes kann bei mehreren Sägen die geeignete Kappsäge ausgewählt und höhenabhängig in eine Bereitschaftsstellung zur Durchführung des Sägeschnittes gesteuert werden.

Die vorliegende Erfindung geht von der Problemstellung aus, den für die optimierte Steuerung von Sägeschnitten erforderlichen maschinellen Aufwand zu verringern.

Ausgehend von dieser Problemstellung ist ein Verfahren der eingangs erwähnten Art erfindungsgemäß dadurch gekennzeichnet, daß während des Vorförderns ständig der Durchmesser des Stammholzes sowie eine Information über die Restlänge des Stammholzes ermittelt wird und daß in Abhängigkeit hiervon ermittelt wird, welcher Kappschnitt zur optimierten Aufteilung des Stammholzes in Abhängigkeit von einem Vorrat gewünschter Abschnittslängen und ggf. -durchmesser durchgeführt wird.

Das erfindungsgemäße Verfahren ermöglicht die Optimierung der Sägeschnitte während des Vorförderns des Stammholzes zur Kappsägevorrichtung, indem während des Vorförderns ständig der Durchmesser des Stammholzes ermittelt wird, so daß auch eine Information über den Durchmesserverlauf des durch die Kappsäge abzulängenden Stammholzes vorliegt. Bevorzugt wird die Ermittlung des Durchmessers am bezüglich der Förderrichtung Stromabwärts liegenden Ende des Förderweges vor der Kappsägeanordnung vorgenommen.

Die Ermittlung der Restlänge kann in einfacher Weise dadurch erfolgen, daß in einem ausreichenden Abstand von der Kappsägeanordnung ein Sensor auf der Fördervorrichtung vorgesehen ist, der den Zeitpunkt ermittelt, zu dem das vorgeförderte Stammholz sich nicht mehr innerhalb des Lichtgitters befindet, so daß zu diesem Zeitpunkt die dem Abstand zur Kappsägeeinrichtung entsprechende Restlänge des Stammholzes vorhanden ist.

In einer besonders bevorzugten Ausbildung des erfindungsgemäßen Verfahrens wird aus den Änderungen des Durchmessers eine mittlere Konizität des Stammholzes ermittelt und unter Anwendung der ermittelten mittleren Konizität und der festgestellten Restlänge des Stammholzes ein Modell des Stammholzes berechnet, das der Aufteilung durch die Kappschnitte zugrunde gelegt wird. Bei dieser Ausbildung des erfindungsgemäßen Verfahrens kann die vorherige Vermessung des Stammholzes entfallen, ohne auf eine entsprechende Optimierung der Sägeschnitte verzichten zu müssen.

Ausgehend von der oben erwähnten Problemstellung ist ferner eine Kappsägevorrichtung der eingangs erwähnten Art erfindungsgemäß dadurch gekennzeichnet, daß die Zentriervorrichtung durch zwei zur seitlichen Anlage am Stammholz unter einer Vorspannung in den Förderweg des Einlaufförderers bewegbare Walzeneinrichtungen gebildet ist, die mit Meßgebern für das Maß der Bewegung in den Förderweg des Einlaufförderers hinein versehen sind und daß eine Auswertungsvorrichtung zur Bestimmung des Durchmessers des Stammholzes aus den Ausgangssignalen der Meßgeber vorgesehen ist.

Bei dieser erfindungsgemäßen Kappsägevorrichtung stellt die Zentriervorrichtung selbst bereits den Sensor für den Durchmesser des Stammholzes dar, da die durch die Meßgeber detektierte Bewegung der Walzeneinrichtungen in den Förderweg des Einlaufförderers hinein die unmittelbare Bestimmung des Durchmessers des Stammholzes ermöglicht.

In einer bevorzugten Ausbildung der erfindungsgemäßen Kappsägevorrichtung sind die Walzeneinrichtungen in den Förderweg schwenkbar und die Meßgeber zur Bestimmung des Schwenkwinkels ausgebildet.

Bevorzugt sind die Walzeneinrichtungen synchronisiert mit dem Einlaufförderer antreibbar und weisen eine zum schlupffreien Transport des Stammholzes ausgebildete Oberfläche, beispielsweise in Form von Stachelwalzen, auf. Durch den schlupffreien Vortrieb des Stammholzes läßt sich die Genauigkeit der Aufteilung durch die Sägeschnitte deutlich verbessern.

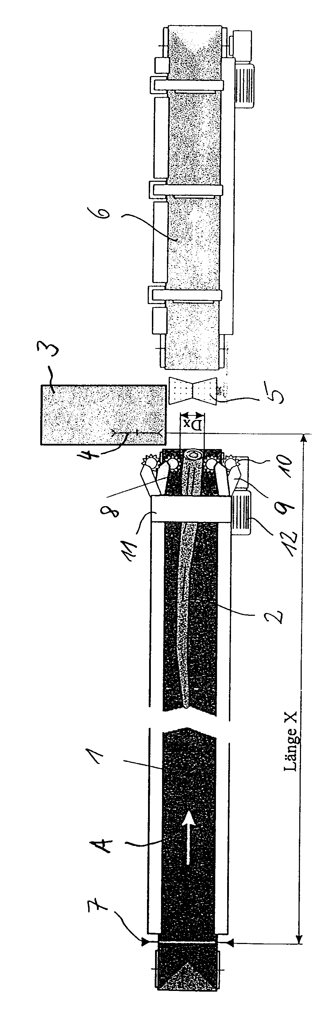

Die Erfindung soll im folgenden anhand eines in der Zeichnung dargestellten Ausführungsbeispiels näher erläutert werden.

Die Zeichnung zeigt eine schematische Draufsicht auf eine Kappsägevorrichtung mit einem Einlaufförderer 1 in Form eines Förderbandes, auf dem Stammholz 2 in seiner Längsrichtung in Richtung auf eine Kappsägeeinrichtung 3 vorgefördert wird (Pfeil A). Die Kappsägeeinrichtung 3 enthält in bekannter Weise eine vertikal und/oder horizontal verfahrbare Säge 4, üblicherweise in Form einer verschwenkbaren Kettensäge oder einer kreissäge. Unmittelbar hinter der Säge 4 sind konische Führungsrollen 5 zur Abstützung des Stammholzes 2 während des Sägeschnitts vorgesehen, die den Übergang zu einem Abförderband 6 herstellen.

Die Zeichnung läßt am Eingang des Einlaufförderers 1 eine optische Detektionseinrichtung 7, vorzugsweise in Form eines Lichtgitters, erkennen, mit der die Anwesenheit bzw. Abwesenheit von Stammholz 2 auf der Höhe der Detektionseinrichtung 7 detektierbar ist. Zu dem Zeitpunkt, zu dem das nachlaufende Ende des Stammholzes 2 die optische Detektionseinrichtung 7 gerade verläßt, weist das Stammholz 2 eine Restlänge X auf, die dem Abstand X zwischen der Säge 4 und der optischen Detektionseinrichtung 7 gleicht.

Am stromabwärts liegenden Ende des Einlaufförderers 1, also unmittelbar vor der Kappsägeeinrichtung 3 ist eine Zentriervorrichtung 8 angeordnet, die aus in den Förderweg des Einlaufförderers 1 mit Hebeln 9 einschwenkbaren Stachelwalzen 10 besteht. Die Stachelwalzen 10, die in der Zeichnung in einer ausgeschwenkten Ruhestellung und in der im Betrieb am Stammholz 2 anliegenden Arbeitsstellung dargestellt sind, werden im Betrieb ständig unter Vorspannung an das Stammholz 2 gedrückt. Eine Auswertungseinrichtung 11 detektiert die aktuelle Winkelstellung der beiden Hebel 9 und ermittelt hieraus den Abstand zwischen den Stachelwalzen 10, der dem aktuellen Durchmesser Dx des Stammholzes 2 am zur Kappsägeeinrichtung 3 gerichteten Ende des Stammholzes 2 entspricht.

Die Auswertungseinrichtung 11 ermittelt (in Verbindung mit einem Rechner) auch die Funktion der Veränderung des Durchmessers Dx über die Länge des Stammholzes 2 und ist somit in der Lage, aus der extrapolierten Konizität des Stammholzes 2 ein Modell des Stammholzes 2 zu erstellen, mit dem die Durchmesser des Stammholzes 2 auf der Restlänge des Stammholzes 2 prognostiziert und zur Optimierung der Schnitte durch die Kappsägeeinrichtung 3 verwendet werden.

Die Stachelwalzen 10 sind synchron mit dem Einlaufförderer 1 durch einen Antriebsmotor 12 angetrieben, so daß sichergestellt ist, daß das Stammholz 2 nach der Ermittlung des Durchmessers Dx schlupffrei zur Kappsägeeinrichtung 3 vorgefördert wird, so daß Ablängfehler durch einen etwaigen Förderschlupf vermieden werden. Die Zentriervorrichtung 8 erfüllt somit eine Mehrfachfunktion, die nicht nur in dem Zentrieren des Stammholzes 2 für die Kappsägeeinrichtung 3 besteht, sondern zugleich dem schlupffreien Transport des Stammholzes 2 und zur Ermittlung des Durchmessers Dx des Stammholzes 2 dient.

## Patentansprüche

1. Verfahren zur Steuerung von Sägeschnitten mittels einer Kappsägevorrichtung an einem in Längsrichtung vorgeförderten Stammholz (2), dadurch gekennzeichnet, daß während des Vorförderns ständig der Durchmesser (Dx) des Stammholzes (2) sowie eine Information über die Restlänge des Stammholzes (2) ermittelt wird und daß in Abhängigkeit hiervon ermittelt wird, welcher Kappschnitt zur optimierten Aufteilung des Stammholzes (2) in Abhängigkeit von einem Vorrat gewünschter Abschnittslängen und ggf. -durchmesser durchgeführt wird.

2. Verfahren nach Anspruch 1, dadurch gekennzeichnet, daß die Ermittlung des Durchmessers am bezüglich der Förderrichtung (A) stromabwärts liegenden Ende des Förderweges vor der Kappsägeanordnung (3) vorgenommen wird.

3. Verfahren nach Anspruch 1 oder 2, dadurch gekennzeichnet, daß aus den Änderungen des Durchmessers (Dx) eine mittlere Konizität des Stammholzes (2) ermittelt wird und daß unter Anwendung der ermittelten mittleren Konizität und der festgestellten Restlänge des Stammholzes (2) ein Modell des Stammholzes (2) berechnet und der Aufteilung durch Kappschnitte zugrunde gelegt wird.

4. Kappsägevorrichtung für Stammholz mit einem Einlaufförderer (1), mit einer am stromabwärts gelegenen Ende des Einlaufförderers (1) angeordneten Zentriervorrichtung (8) und mit einer stromabwärts folgenden Kappsägeanordnung (3), dadurch gekennzeichnet, daß die Zentriervorrichtung (8) durch zwei zur seitlichen Anlage am Stammholz (2) unter einer Vorspannung in den Förderweg des Einlaufförderers bewegbare Walzeneinrichtungen (9, 10) gebildet ist, die mit Meßgebern für das Maß der Bewegung in den Förderweg des Einlaufförderers hinein versehen sind und daß eine Auswertungsvorrichtung (11) zur Bestimmung des Durchmessers (Dx) des Stammholzes (2) aus den Ausgangssignalen der Meßgeber vorgesehen ist.

5. Kappsägevorrichtung nach Anspruch 3, dadurch gekennzeichnet, daß die Walzeneinrichtungen (9, 10) in den Förderweg schwenkbar und die Meßgeber zur Bestimmung des Schwenkwinkels ausgebildet sind.

6. Kappsägevorrichtung nach Anspruch 3 oder 4, dadurch gekennzeichnet, daß die Auswertungseinrichtung (11) zur ständigen Bestimmung des Durchmessers (Dx) des Stammholzes (2) während des Transports und zur Steuerung der Kappsägeanordnung (3) in Abhängigkeit von den ermittelten Durchmesserwerten und einer zusätzlich bestimmten Restlänge des Stammholzes (2) ausgelegt ist.

7. Kappsägevorrichtung nach Anspruch 5, dadurch gekennzeichnet, daß in einem definierten Abstand (X) zur Kappsägeanordnung (3) ein Sensor (7) für das Vorhandensein von Stammholz (2) angeordnet ist und daß der Auswertungseinrichtung (11) ein Signal des Sensors (7) für das Ende des Stammholzes (2) zur Bestimmung der Restlänge zuführbar ist.

8. Kappsägevorrichtung nach einem der Ansprüche 3 bis 6, dadurch gekennzeichnet, daß die Walzeneinrichtungen (9, 10) synchronisiert mit dem Einlaufförderer (1) antreibbar sind und eine zum schlupffreien Transport des Stammholzes (2) ausgebildete Oberfläche aufweisen.

9. Kappsägevorrichtung nach Anspruch 7, dadurch gekennzeichnet, daß die Walzeneinrichtungen (9, 10) mit Stachelwalzen (10) ausgebildet sind.
